## Europäisches Patentamt

## European Patent Office

## Office européen des brevets

(11) Publication number: **0 306 952**
**B1**

(12) **EUROPEAN PATENT SPECIFICATION**

(45) Date of publication of patent specification: **23.01.91**

(51) Int. Cl.⁵: **B 28 D 1/08**

(21) Application number: **88114693.0**

(22) Date of filing: **08.09.88**

㊸ Wire saw.

(30) Priority: **09.09.87 JP 137749/87**

(43) Date of publication of application:
**15.03.89 Bulletin 89/11**

(45) Publication of the grant of the patent:
**23.01.91 Bulletin 91/04**

(84) Designated Contracting States:
**BE DE FR IT**

(56) References cited:
**EP-A-0 160 625**
**CH-A-322 567**
**DE-A-3 148 065**

**SOVIET INVENTIONS ILLUSTRATED, P,Q
sections, week 8431, September 12, 1984;
DERWENT PUBLICATIONS LTD., London, P 64**

(73) Proprietor: **OSAKA DIAMOND INDUSTRIAL CO.,
LTD.**
**80, Otorikitamachi 2-cho**
**Sakai-shi Osaka (JP)**

(72) Inventor: **Kawase, Tsunezo**
**1-6-17, Inagawa Fujieda-shi**
**Shizuoka (JP)**
Inventor: **Koroku, Shuichiro**
**16-16, Takasu Fujieda-shi**
**Shizuoka (JP)**
Inventor: **Okada, Kunio**
**21-17, Asahien Saeki-ku**
**Hiroshima-shi Hiroshima (JP)**

(74) Representative: **Glawe, Delfs, Moll & Partner**
**Patentanwälte**
**Postfach 26 01 62 Liebherrstrasse 20**
**D-8000 München 26 (DE)**

Courier Press, Leamington Spa, England.

## Description

The present invention relates to a wire saw used to cut granite, marble, concrete or the like according to the preamble part of claim 1.

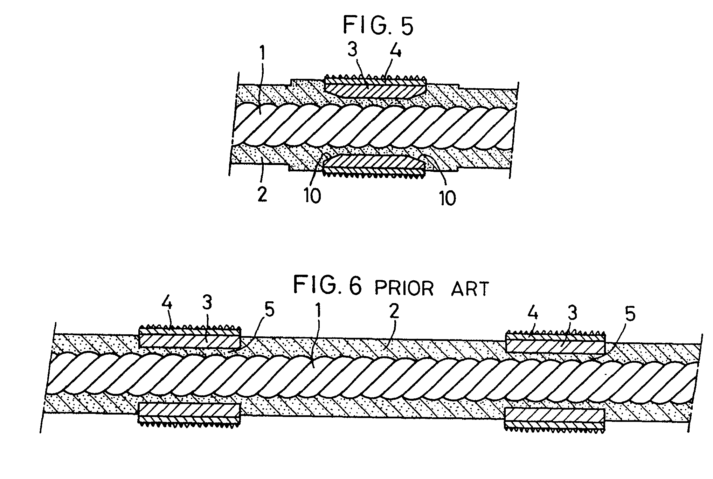

Fig. 6 shows a prior art wire saw which has a wire rope 1, a resilient layer 2, a plurality of sleeves 3 mounted on the wire through the resilient layer at spacings, and a hard abrasive layer 4 provided on the outer periphery of the sleeve 3 and made of diamond, cubic boron nitride (CBN) or the like. The resilient layer 2 usually covers the entire peripheral surface of the wire 1 and serves to bond the sleeve 3 to the wire, prevent the sleeve from turning with respect to the wire and displacing axially, and protect the wire from chips.

With such a prior art wire saw, since only the bonding force of the resilient layer is resorted to bond the sleeve to the resilient layer, bonding is not necessarily sufficient. During cutting, the sleeve can get free of the resilient layer and turn loosely. This might cuause breakage of the wire due to abrasion between the sleeve and the wire. Poor bonding results from the fact that in the molding process, the resilient material will not flow smoothly into between the gap 5 between the sleeve and the wire. This results in uneven molding and thus uneven bonding force.

A wire saw according to the preamble part of claim 1 is disclosed in EP—A—0 160 625. In this wire saw each of the sleeves is provided with axial appendices of reduced diameter extending in the resilient layer so that the bonding of the sleeves is improved. However, in this known wire saw the problem arises that portions of the resilient layer between the sleeves are liable to get damaged due to contact with the material being cut. Therefore, a large contact resistance arises leading to a dull cut and increasing the tension required to operate the wire saw.

A further wire saw is disclosed in CH—A—322 567 in which the sleeves are not fixed in position on the rope but are mounted slidably, and a spring is wound around the wire between successive sleeves. An abrasive layer is provided on portions on each sleeve so that the sleeves form portions of reudced thickness adajacent to the abrasive layer. As no resilient layer is provided for protecting the rope it can easily be damaged due to material entering the space between the rope and the sleeves and due to the sliding movement of the sleeves.

It is therefore the object of the invention to provide a wire saw which ensures a secure bonding between the resilient layer and the sleeves and which facilitate the cutting operation.

This object is achieved by a wire saw comprising a wire rope, a resilient layer covering the outer periphery of the wire rope, a plurality of sleeves mounted on the wire rope by means of the resilient layer and spaced at distances, the sleeve having an abrasive layer on the outer periphery thereof, wherein the outer diameter of the resilient layer is smaller at portions between successive sleeves than over and adjacent to the sleeves, to form shoulders on the resilient layer at portions corresponding to both ends of each sleeve.

In accordance with the present invention, engaging portions are provided on one of the sleeve and the resilient layer so as to protrude toward the other. The engaging portions bite into the resilient layer of the sleeve, preventing the sleeve from turning loosely.

The arrangement insures that the sleeve is bonded securely to the resilient layer. This avoids breakage of the wire during cutting and ensures stable cutting for a prolonged period.

Other objects and features of the present invention will become apparent from the following description with a reference to the accompanying drawings in which:

Figs. 1 to 3 are partially sectional side views of the first to third embodiments;

Fig. 4 is a partially view of the fourth embodiment;

Fig. 5 is a sectional side view of the fifth embodiment; and

Fig. 6 is a sectional view of a prior art wire saw.

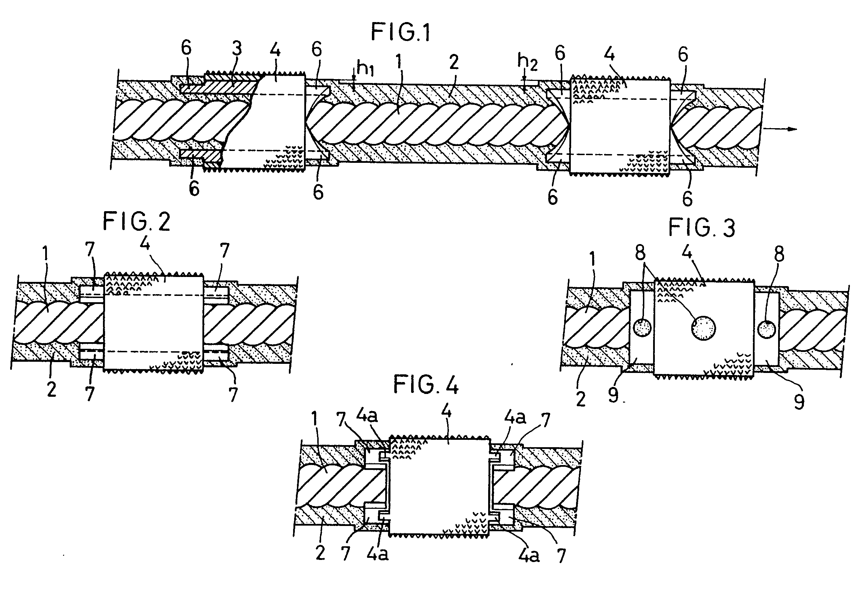

Firstly, referring to Fig. 1, an engaging portion 6 is provided on each end of the sleeve 3 so as to protrude axially into the resilient layer 2. The engaging portions 6 engage the resilient layer and serve to prevent the sleeve 3 from turning with respect to the resilient layer.

The wire rope 1 may be formed by twisting stainless steel wires with or without copper or zinc galvanized thereon. It should have an outer diameter of about 4.5 mm.

The sleeve 3 may be made of steel and should have its end portions copper plated to improve the bond with the resilient layer 2.

The resilient layer may be made of a resilient material such as natural rubber or synthetic resin. Preferably, it should be formed by covering the wire rope 1 with a mixture of natural rubber with carbon black and vulcanizing the mixture. An adhesive may be used for better bonding between the resilient layer and the wire rope and between the former and the sleeve.

In the embodiment of Fig. 2, the sleeve 3 is provided with an engaging portion 7 of a different shape.

In the embodiment of Fig. 3, the sleeve is substantially the same as in the embodiment of Fig. 2, but is formed with a plurality of holes 8 to receive the resilient material therein to form engaging portions.

In the embodiment of Fig. 5, the sleeve is formed on its inner periphery at each end thereof with a tapered portion 10 having its inside diameter increasing toward the end of the sleeve 3. The tapered portions 10 allow the resilient material to smoothly flow into between the wire rope 1 and the sleeve 3 and form the resilient layer uniformly over the entire length of the sleeve 3.

The embodiment of Fig. 4 is substantially the same as the embodiment of Fig. 2, but the

EP 0 306 952 B1

abrasive layer 4 is formed with a projection 4a protruding into the sleeve 3 to prevent the abrasive layer 4 from turning with respect to the sleeve 3. Coupled with the affect of the engaging portions 7, the projections 4a help to reduce the possibility of the abrasive layer 4 displacing with respect to the wire rope 1, thus ensuring a longer working life for the wire saw.

**Claims**

1. A wire saw comprising: a wire rope (1), a resilient layer (2) convering the outer periphery of said wire rope (1), a plurality of sleeves (3) mounted on said wire rope (1) by means of said resilient layer (2) and spaced at distances, said sleeves (3) having an abrasive layer (4) on the outer periphery thereof, characterized in that the outer diameter of said resilient layer (2) is smaller at portions between successive sleeves (3) than over and adjacent to said sleeves (3), whereby shoulders are formed on said resilient layer (2) at portions corresponding to both ends of each sleeve (3).

2. A wire saw as claimed in claim 1, wherein the shoulder formed at the advancing end of each of said sleeves (3) in the running direction of the wire saw has a smaller height $(h_1)$ than the shoulder formed at the trailing end of said sleeve (3).

3. A wire saw as claimed in claim 1, further comprising an engaging means (6, 7, 8) extending axially to ensure a secure bond between said sleeve (3) and said resilient layer (2).

4. A wire saw as claimed in claim 1, wherein each of said sleeves (3) has said engaging portion (6, 7, 8) at each end thereof so as to extend axially toward said resilient layer (2).

5. A wire saw as claimed in claim 1, wherein said sleeves (3) are formed with a hole (8) to receive said resilient layer (2) therein to form said engaging portion.

6. A wire saw as claimed in claim 1, wherein said sleeves (3) have their inner periphery tapered at a portion (10) adjacent to each end thereof.

7. A wire saw as claimed in claim 1, wherein said abrasive layer (4) has a projection (4a) protruding into said sleeve (3) to secure said abrasive layer to said sleeve.

**Patentansprüche**

1. Drahtseil-Säge mit: Einem Drahtseil (1), einer elastischen Schicht (2), die den Außenumfang des Drahtseils (1) umgibt, mehreren Hülsen (3), die auf dem Drahtseil (1) mittels der elastischen Schicht (2) montiert sind, und die im Abstand zueinander angeordnet sind, wobei die Hülsen (3) an ihrem äußeren Umfang eine Schmirgelschicht (4) aufweisen, dadurch gekennzeichnet, daß der Außendurchmesser der elastischen Schicht (2) an den Abschnitten zwischen aufeinanderfolgenden Hülsen (3) kleiner als im Bereich der Hülsen (3) und über diese hinausgehend, ist, wodurch an der elastischen Schicht (2) an Teilen, die den beiden Enden jeder Hülse (3) entsprechen, Schultern ausgebildet sind.

2. Drahtseil-Säge nach Anspruch 1, dadurch gekennzeichnet, daß die Schulter, welche an dem in Laufrichtung der Drahtseil-Säge vorne liegenden Ende jeder Hülse (3) ausgebildet ist, eine kleinere Höhe $(h_1)$ als die Schulter hat, die an dem hinteren Ende dieser Hülse (3) ausgebildet ist.

3. Drahtseil-Säge nach Anspruch 1, dadurch gekennzeichnet, daß weiterhin Eingriffsmittel (6, 7, 8) vorgesehen sind, die sich in axialer Richtung erstreckten, um eine zweite Bindung zwischen der Hülse (3) und der elastischen Schicht (2) sicherzustellen.

4. Drahtseil-Säge nach Anspruch 1, dadurch gekennzeichnet, daß jeder der Hülsen (3) den Eingriffsteil (6, 7, 8) an jedem Ende so ausgebildet hat, daß dieser sich axial zur elastischen Schicht (2) hin erstreckt.

5. Drahtseil-Säge nach Anspruch 1, dadurch gekennzeichnet, daß die Hülsen (3) mit einer Bohrung (8) versehen sind, in der die elastische Schicht (2) aufgenommen ist, um den Eingriffsteil zu bilden.

6. Drahtseil-Säge nach Anspruch 1, dadurch gekennzeichnet, daß die Hülsen (3) an einem Abschnitt (10) in der Nähe jeden Endes an ihrem inneren Umfang abgeschrägt sind.

7. Drahtseil-Säge nach Anspruch 1, dadurch gekennzeichnet, daß die Schmirgelschicht (4) Vorsprünge (4a) aufweist, die in die Hülse (3) ragen, um die Schmirgelschicht in der Hülse zu befestigen.

**Revendications**

1. Scie à câble comprenant un câble métallique (1), une couche élastique (2) recouvrant la périphérie extérieure dudit câble métallique (1), une pluralité de manchons (3) montés sur ledit câble métalique (1) au moyen de ladite couche élastique (2) et disposés à intervalles, lesdits manchons (3) comportant une couche abrasive (4) sur leur périphérie extérieure, caractérisée en ce que le diamètre extérieur de ladite couche élastique (2) est plus petit dans les parties situées entre les manchons successifs (3) que sur lesdits manchons (3) et près de ceux-ci, de sorte que des épaulements sont formés sur ladite couche élastique (2) aux endroits correspondants aux deux extrémités de chaque manchon (3).

2. Scie à câble suivant la revendication 1, dans laquelle l'épaulement formé à l'extrémité avant de chacun desdits manchons (3) dans le sens de déplacement de la scie à câble est de hauteur $(h_1)$ plus petite que celle de l'épaulement formé à l'extrémité arrière dudit manchon (3).

3. Scie à câble suivant la revendication 1, comprenant en outre des moyens d'accouplement (6, 7, 8) s'étendant axialement pour procurer une liaison sûre entre ledit manchon (3) et ladite couche élastique (2).

4. Scie à câble suivant la revendication 1, dans laquelle chacun desdits manchons (3) comporte ledit élément d'accouplement (6, 7, 8) à chacune de ses extrémités, de façon à ce qu'il s'étende axialement vers ladite couche élastique (2).

5. Scie à câble suivant la revendication 1, dans laquelle lesdits manchons (3) comportent un trou (8) dans lequel ladite couche élastique (2) pénètre pour former ledit élément d'accouplement.

6. Scie à câble suivant la revendication 1, dans laquelle la périphérie intérieure desdits manchons (3) est conique dans une partie (10) adjacente à chacune de leures extrémités.

7. Scie à câble suivant la revendication 1, dans laquelle ladite couche abrasive (4) comporte une protubérance (4a) qui fait saillie dans ledit manchon (3) pour fixer ladite couche abrasive audit manchon.

EP 0 306 952 B1

FIG.1

6 3 4 6 6 4 6

$h_1$ 1 2 $h_2$ 6 6

6 6 6 6

FIG.2

1 7 4 7

2 7 7

FIG.3

1 8 4 8

2 9 9

FIG.4

1 7 4a 4 4a 7

2 7 4a 4a 7

FIG. 5

FIG. 6 PRIOR ART